# EUROPEAN PATENT SPECIFICATION

(11) **EP 3 244 107 B1**
(45) Date of publication and mention of the grant of the patent: **12.08.2020**
(21) Application number: 17170066.9
(22) Date of filing: 09.05.2017
(51) Int. Cl.: F16K 11/078, F16K 31/60, F16K 27/04, E03C 1/04

(54) **SINGLE LEVER MONOBLOC MIXER TAP CARTRIDGE**
EINHEBELMISCHVENTIL
VANNE MITIGEUSE À COMMANDE PAR LEVIER UNIQUE

(30) Priority: 10.05.2016 IT UA20163297
(43) Date of publication of application: 15.11.2017
(73) Proprietor: Hydroplast S.R.L., 28019 Suno, Novara (IT)
(72) Inventor: CATTANEO, Piero, 28019 Suno/Novara (IT)
(74) Representative: Rastelli, Franco

(56) References cited:
- EP-A1- 0 590 427
- EP-A1- 2 722 569
- EP-A2- 0 551 059
- EP-A2- 1 028 279
- US-A- 3 782 417

## Description

### BACKGROUND OF INVENTION

The present invention relates to a single lever monobloc mixer tap cartridge according to the preamble of claim 1.

As is known, mixer cartridges, with ceramic discs or otherwise, have been used in the taps and fittings sector for a long time for single lever mixer taps.

These mixer cartridges are designed to mix hot and cold water, gradually passing from a lower temperature to higher temperature and vice versa, whether fully open or in partially open positions.

Traditional cartridges have the outlet for the mixed water located on the bottom or on the sides, with a dynamic sealing system provided by ceramic discs and one or more static seals.

However, if the traditional cartridges are small in size, there are problems with too low or insufficient flowrates.

To obtain better performance, cartridges have been conceived with sides water outlets instead of bottom, but this idea necessitates water traversing the entire internal mechanism.

The fact that the mechanism is always wet makes the system subject to having the internal lubricant flushed out and vulnerable lime scale deposits, rust and other substances normally present in the water, making operation stiffer with time until the tap almost becomes stuck.

Furthermore, to prevent the water inside the cartridge leaking out from the top part of the tap, a gasket is provided that seals against a spherical part of the control rod: it is obvious that such gasket is subject to wear as it constitutes a dynamic seal with respect to the continually moving rod.

Examples of single lever monobloc mixer tap cartridge are disclosed in document EP2722569, EP0551059, EP1028279, EP0590427, and US3782417.

The document EP2722569 is considered as representing the closest prior art; the features mentioned in the preamble of claim 1 are disclosed in said document.

### SUMMARY OF INVENTION

The aim of the present invention is to provide a new mixer cartridge that overcomes the aforementioned drawbacks of the prior art.

Within the scope of the above mentioned aim, a main object of the invention is to provide a mixer cartridge without the circulation of water outside the ceramic parts and inside the cartridge, thereby avoiding having the mechanism perpetually immersed in water.

Another object of the invention is to provide a mixer cartridge that does not have a dynamic seal on the control rod.

A further object of the invention is to provide a mixer cartridge that is cheaper than mixer cartridges with internal water circulation or with three ceramic discs.

Another object of the invention is to provide a mixer cartridge having the same delivery characteristics and with respect to actual traditional cartridges, optimal pressure resistance, smoother operation and longer life, even with normal ceramic discs, and therefore without the use of special and more expensive materials.

A further object of the invention is to provide a structure that can be manufactured using materials commonly available on the market and which is also competitive from an economic standpoint.

According to the present invention, the above mentioned aim and objects, as well as other objects which will become more apparent hereinafter, are achieved by a single lever monobloc mixer tap cartridge, as described in the claims.

### BRIEF DESCRIPTION OF DRAWINGS

Further characteristics and advantages of the present invention will become more apparent from the following disclosure of a preferred, but not exclusive embodiment of the invention, being shown by way of an indicative but not limitative example in the accompanying drawings, where:
Figure 1 is a perspective view of a mixer cartridge according to the present invention, in the external water circulation mode;
Figure 2 is a bottom view of the cartridge in the previous figure;
Figure 3 is a perspective view of a mixer cartridge according to the present invention, in the direct bottom outflow mode;
Figure 4 is a bottom view of the cartridge in the previous figure;
Figure 5 is a section view of a mixer cartridge according to the present invention, in the external water circulation mode;
Figure 6 is a section view of a mixer cartridge according to the present invention, in the direct bottom outflow mode; and
Figure 7 shows the fixed disc.

### DESCRIPTION OF PREFERRED EMBODIMENTS

According to the invention, and with reference to the numeric symbols in the above-mentioned figures, the single lever monobloc mixer tap cartridge, indicated as a whole by reference numeral 1, comprises a fixed disc 2 provided with an outlet port 19 and two openings, respectively for the hot and cold water coming from two inlet ports, indicated by reference numerals 3 and 4, formed in a base 5 in which the fixed disc 2 is mounted.

A sliding disc 6 controlled by a control rod 7 slides on the fixed disc 2 and has a mixing opening 8 designed to make the inlet ports 3 and 4 in communication with an outlet port 9 formed in the base 5 and aligned with an outlet hole 19 in the fixed disc, from which the mixed water comes out.

The sliding of the sliding disc 6 on the fixed disc 2 causes the partial opening or complete closure of one or both of the openings of the fixed disc 2, regulating the amount of hot and cold water that passes from the inlet ports 3 and 4 to the outlet port 9 of the mixed water.

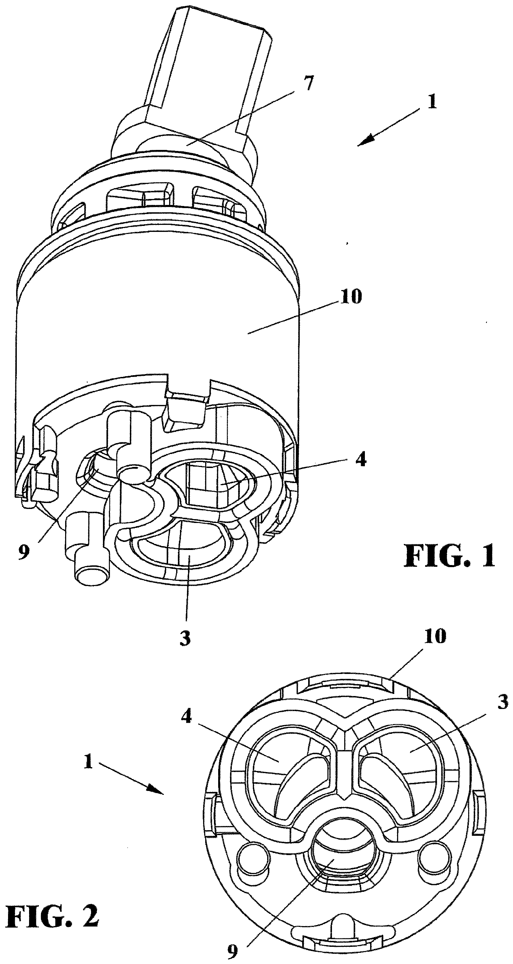

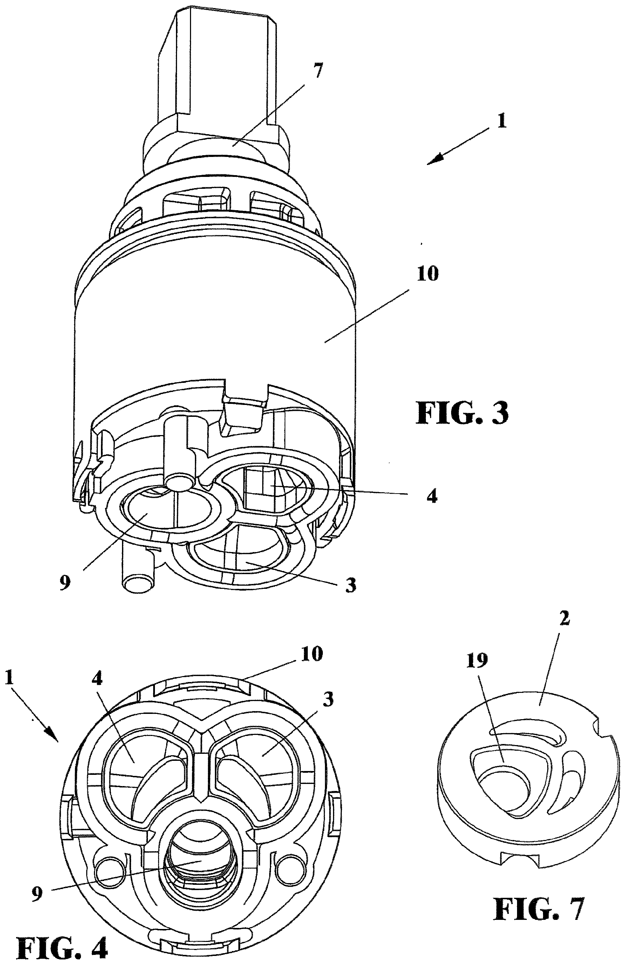

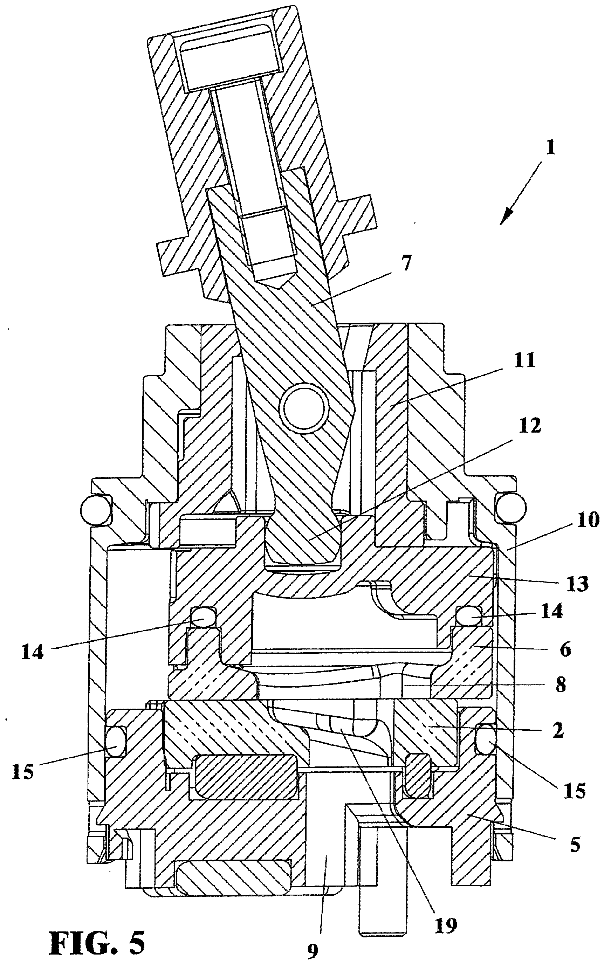

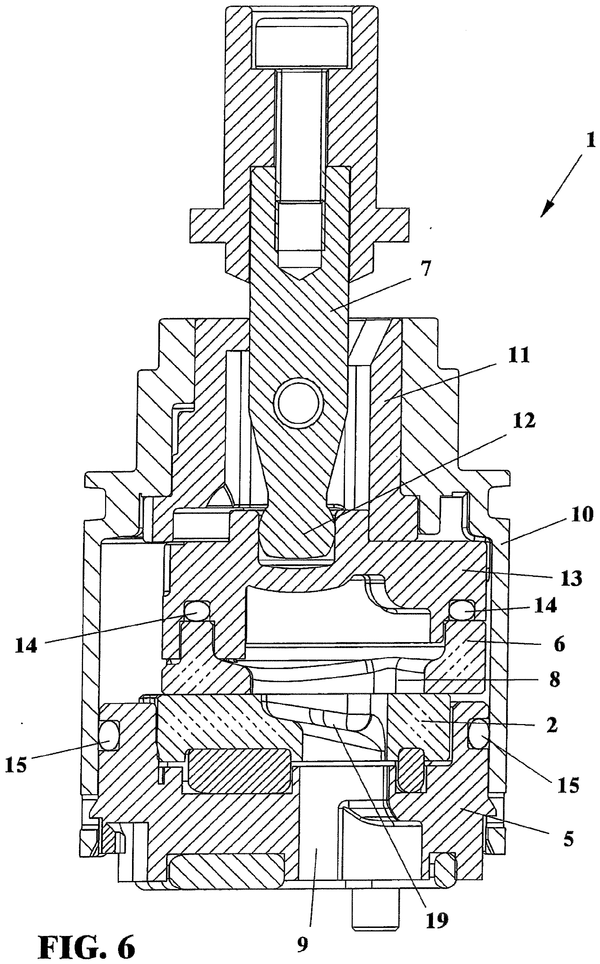

According to the present invention, the fixed disc 2 and sliding disc 6 are inserted in a completely closed holder body 10, which only allows the mixed water to exit from the bottom of the cartridge, both in the water circulation mode (Figures 1, 2 and 5) and the direct mode (Figures 3, 4 and 6).

The holder body 10 is mounted on the base 5 with the interposition of a gasket 15.

The holder body 10 is completely closed and the dynamic seal is provided exclusively on the discs 2 and 6.

The discs 2 and 6 are advantageously made in the form of ceramic discs.

The control rod 7 is hinged to a support block 11, inserted in the holder body 10, and has a control tip 12 engaged in the seat of a movable disc carrier 13, which is movable in the holder body 10.

A gasket 14 is placed between the sliding disc 6 and the movable disc carrier 13.

Since the sliding disc 6 is fixed in the movable disc carrier 13, the gasket 14 performs a simple static seal function, therefore it is not subject to wear.

From the above disclosure it should be apparent that the invention fully achieves the intended aim and objects.

A new mixer cartridge structure has in fact been produced that, thanks to comprising a completely closed holder body without lateral openings typical of traditional mixer cartridges, only allows water to leave from the bottom, in the direct and water circulation modes, and the dynamic sealing is provided exclusively on the ceramic discs.

Unlike traditional cartridges that, having the side mixed water outlet need a system of dynamic seals in addition to the ceramic ones, comprising at least one gasket housed on the diameter of the control rod, subject to wear and consequent water leakage from the cartridge, the present cartridge does not need any dynamic seal on the rod, but a simple seal between the sliding disc and the disc carrier, acting as a static seal, and therefore not subject to wear.

Furthermore, in the present cartridge, the ceramic parts and all the mechanism are not always immersed in water and therefore there are considerably less subject to the effects of lime scale deposits, rust and other substances normally present in the water.

The structure of the mixer cartridge according to the present invention offers several significant advantages with respect to traditionally constructed cartridges.

This mixer cartridge allows the use of only two ceramic discs for the seal, thereby offering a less expensive product with respect to competitors using three ceramic discs to overcome the above-described problems.

Despite the small dimensions and theoretically less favourable water outlet, this cartridge ensures a delivery similar to traditional cartridges, optimal resistance to high pressures, smoothness of operation and long life, even using normal ceramic discs, without necessarily using special and more expensive materials.

This cartridge also offers full interchangeability with products currently on the market since it can be produced in several versions.

In practising the invention, the used materials, as well as the contingent size may be any depending on requirements.

## Claims

1. A single lever monobloc mixer tap cartridge, comprising: a fixed disc (2) provided with an outlet port (19) and two further ports, respectively for the hot and cold water coming from two inlet ports (3, 4); and a sliding disc (6) that slides on the fixed disc (2), is controlled by a control rod (7) and having a mixing opening (8) designed to make said inlet apertures (3, 4) in communication with an outlet port (9), from which the mixed water comes out; the sliding of said sliding disc (6) on said fixed disc (2) causes the partial or complete opening or the closure of the one or both of said openings of said fixed disc (2), regulating the amount of hot and cold water that passes from said inlet ports (3, 4) to said outlet port (9) of mixed water; said fixed disc (2) and said sliding disc (6) being inserted in a completely closed holder body (10), which only allows the mixed water to exit from said outlet port (9), wherein the dynamic seal is provided exclusively on said fixed disc (2) and said sliding disc (6); said cartridge being **characterized in that** said two inlet ports (3, 4) and said outlet port (9) are formed in a base (5) in which the fixed disc (2) is mounted; said holder body (10) being mounted on said base (5) with the interposition of a gasket (15).

2. The mixer cartridge, according to claim 1, **characterized in that** said fixed disc (2) and sliding disc (6) are ceramic discs.

3. The mixer cartridge, according to claim 1, **characterized in that** said control rod 7 is hinged to a support block (11), inserted in said holder body (10), and has a control tip (12) engaged in a seat made in the movable disc carrier (13); said movable disc carrier (13) is movable in said holder body (10).

4. The mixer cartridge, according to claim 3, **characterized in that** it comprises a gasket (14) arranged between said sliding disc (6) and said movable disc carrier (13).

## Patentansprüche

1. Einhebelmischventil, umfassend: eine starre Scheibe (2), die mit einer Auslassöffnung (19) und zwei weiteren Durchlassöffnungen versehen ist, jeweils für das Heiß- und Kaltwasser, das von zwei Einlassöffnungen (3, 4) kommt; und eine Gleitscheibe (6), die auf der starren Scheibe (2) gleitet, durch eine Steuerstange (7) gesteuert wird und eine Mischöffnung (8) aufweist, die dazu ausgelegt ist, die Einlassöffnungen (3, 4) in Verbindung mit einer Auslassöffnung (9) zu bringen, aus der das Mischwasser kommt; wobei das Gleiten der Gleitscheibe (6) auf der starren Scheibe (2) das teilweise oder vollständige Öffnen oder das Schließen der einen oder beider der Öffnungen der starren Scheibe (2) bewirkt, wodurch die Menge von Heiß- oder Kaltwasser, die von den Einlassöffnungen (3, 4) zur Auslassöffnung (9) von Mischwasser durchläuft, reguliert wird; wobei die starre Scheibe (2) und die Gleitscheibe (6) in einen vollständig geschlossenen Halterkörper (10) eingesetzt sind, der es nur dem Mischwasser ermöglicht, aus der Auslassöffnung (9) auszutreten, wobei die dynamische Abdichtung ausschließlich an der starren Scheibe (2) und der Gleitscheibe (6) vorgesehen ist; wobei das Ventil **dadurch gekennzeichnet ist, dass** die zwei Einlassöffnungen (3, 4) und die Auslassöffnung (9) in einer Basis (5) ausgebildet sind, in der die starre Scheibe (2) angebracht ist; wobei der Halterkörper (10) unter Zwischenlage einer Dichtung (15) an der Basis (5) angebracht ist.

2. Mischventil nach Anspruch 1, **dadurch gekennzeichnet, dass** die starre Scheibe (2) und die Gleitscheibe (6) Keramikscheiben sind.

3. Mischventil nach Anspruch 1, **dadurch gekennzeichnet, dass** die Steuerstange (7) an einen Stützblock (11) angelenkt ist, der in den Halterkörper (10) eingesetzt ist, und eine Steuerspitze (12) aufweist, die in einem Sitz in Eingriff gebracht ist, welcher im beweglichen Scheibenträger (13) hergestellt ist; wobei der bewegliche Scheibenträger (13) im Halterkörper (10) beweglich ist.

4. Mischventil nach Anspruch 3, **dadurch gekennzeichnet, dass** es eine Dichtung (14) umfasst, die zwischen der Gleitscheibe (6) und dem beweglichen Scheibenträger (13) angeordnet ist.

## Revendications

1. Vanne mitigeuse à commande par levier unique, comprenant : un disque fixe (2) pourvu d'un port de sortie (19) et de deux autres ports respectivement pour l'eau chaude et froide provenant de deux ports d'entrée (3, 4) ; et un disque coulissant (6) qui glisse sur le disque fixe (2), est commandé par une barre de commande (7) et comportant une ouverture de mélange (8) conçue pour mettre lesdites ouvertures d'entrée (3, 4) en communication avec un port de sortie (9) d'où l'eau mélangée sort ; le coulissement dudit disque coulissant (6) sur ledit disque fixe (2) provoquant l'ouverture partielle ou complète ou la fermeture de l'une ou des deux dites ouvertures dudit disque fixe (2), en régulant la quantité d'eau chaude et froide qui passe depuis ledit port d'entrée (3, 4) vers ledit port de sortie (9) d'eau mélangée ; ledit disque fixe (2) et ledit disque coulissant (6) étant insérés dans un corps support complètement fermé (10) qui permet seulement à l'eau mélangée de sortir dudit port de sortie (9), dans lequel le joint dynamique est prévu exclusivement sur ledit disque fixe (2) et ledit disque coulissant (6) ; ladite vanne étant **caractérisée en ce que** lesdits deux ports d'entrée (3, 4) et ledit port de sortie (9) sont formés dans une base (5) dans laquelle le disque fixe (2) est monté ; ledit corps support (10) étant monté sur ladite base (5) avec interposition d'un joint (15).

2. Vanne mitigeuse selon la revendication 1, **caractérisée en ce que** lesdits disque fixe (2) et disque coulissant (6) sont des disques en céramique.

3. Vanne mitigeuse selon la revendication 1, **caractérisée en ce que** ladite barre de commande (7) est articulée sur un bloc de support (11) inséré dans ledit corps de support (10), et comporte une pointe de commande (12) engagée dans un siège réalisé dans le support de disque mobile (13) ; ledit support de disque mobile (13) étant mobile dans ledit corps de support (10).

4. Vanne mitigeuse selon la revendication 3, **caractérisée en ce qu'**il comprend un joint (14) disposé entre ledit disque coulissant (6) et ledit support de disque mobile (13).
